(19) Europäisches Patentamt
European Patent Office
Office européen des brevets

(11) **EP 2 955 665 A1**

(12) **EUROPÄISCHE PATENTANMELDUNG**

(43) Veröffentlichungstag:
**16.12.2015 Patentblatt 2015/51**

(51) Int Cl.:
***G06K 9/62*** *(2006.01)*

(21) Anmeldenummer: **15168187.1**

(22) Anmeldetag: **19.05.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **11.06.2014 DE 102014211088**

(71) Anmelder: **Deutsches Zentrum für Luft- und Raumfahrt e.V.**
**51147 Köln (DE)**

(72) Erfinder: **Avbelj, Janja**
**80686 München (DE)**

(74) Vertreter: **Fink Numrich**
**Patentanwälte**
**European Patent and Trademark Attorneys**
**Wendl-Dietrich-Straße 14**
**D-80634 München (DE)**

(54) **VERFAHREN ZUM RECHNERGESTÜTZTEN VERARBEITEN VON DIGITALEN BILDDATEN**

(57)   Die Erfindung betrifft ein Verfahren zum rechnergestützten Verarbeiten von digitalen Bilddaten, welche ein oder mehrere, aus einem digitalen Bild extrahierte Objekte (O, O1, ..., 09) in einem Raumbereich mit zugeordnetem Koordinatensystem enthalten und in welchen ein jeweiliges Objekt (O, O1, ..., 09) durch einen Objektumriss umfassend Eckpunkte (al, a2, a3) mit zweidimensionalen oder dreidimensionalen Positionen und Liniensegmente (L) oder Flächensegmente zwischen den Eckpunkten (al, a2, a3) definiert ist, wobei ein jeweiliges Objekt (O, O1, ..., 09) mit einem zugeordneten Referenzobjekt (R, R1, ..., R9) aus Referenzdaten verglichen wird, wobei das zugeordnete Referenzobjekt (R, R1, ..., R9) im gleichen Koordinatensystem wie die digitalen Bilddaten durch einen Referenzumriss umfassend Eckpunkte (bl, b2) mit zweidimensionalen oder dreidimensionalen Positionen und Liniensegmente (L') oder Flächensegmente zwischen den Eckpunkten (bl, b2) definiert ist. Das erfindungsgemäße Verfahren zeichnet sich dadurch aus, dass der Vergleich eines jeweiligen Objekts (O, O1, ..., 09) mit dem zugeordneten Referenzobjekt (O, O1, ..., 09) derart erfolgt, dass für das jeweilige Objekt (O, O1, ..., 09) ein Faktor ermittelt wird, der von einem Abstandsmaß (p(A, B)) abhängt, welches aus ersten und zweiten minimalen Abständen (dl, d2) berechnet wird, wobei für jeden Eckpunkt (al, a2, a3) des jeweiligen Objekts (O, O1, ..., 09) ein minimaler erster Abstand (d1) ermittelt wird, welcher der geringste Abstand des jeweiligen Eckpunkts (al, a2, a3) des jeweiligen Objekts (O, O1, ..., 09) zu dem Referenzumriss des zugeordneten Referenzobjekts (R, R1, ..., R9) ist, und wobei für jeden Eckpunkt (bl, b2) des zugeordneten Referenzobjekts (R, R1, ..., R9) ein minimaler zweiter Abstand (d2) ermittelt wird, welcher der geringste Abstand des jeweiligen Eckpunkts (bl, b2) des zugeordneten Referenzobjekts (R, R1, ..., R9) zu dem Objektumriss des jeweiligen Objekts (O, O1, ..., 09) ist.

Fig. 1

EP 2 955 665 A1

**Beschreibung**

Die Erfindung betrifft ein Verfahren zum rechnergestützten Verarbeiten von digitalen Bilddaten sowie ein entsprechendes Computerprogrammprodukt und ein entsprechendes Computerprogramm.

Aus dem Stand der Technik ist es bekannt, aus digitalen Bildern mit rechnergestützten Verfahren Objekte zu extrahieren, um hierüber automatisch Informationen über die Bilder zu gewinnen.

Verfahren zu Extraktion von Objekten werden häufig für digitale Fernerkundungsbilder eingesetzt, welche Bilder der Erdoberfläche bzw. eines anderen Himmelskörpers darstellen, die mit einer geeigneten Sensorik auf einem Flugobjekt (z.B. Flugzeug oder Satellit) aufgenommen wurden. Die Verarbeitung der Rohdaten solcher Bilder geschieht in einer Prozesskette, bei der die Rohdaten zunächst in mehreren Schritten korrigiert werden. Zum Beispiel werden radiometrische oder geometrische Korrekturen durchgeführt. Anschließend können aus den Daten z.B. 3D-Modelle der Erdoberfläche erzeugt werden. Mittels Verfahren zur Objektextraktionen erhält man schließlich digitale Bilddaten, in denen ein oder mehrere Objekte, wie z.B. Bauwerke oder Gebäude, identifiziert sind. Diese digitalen Bilddaten liegen häufig als sog. Vektordaten vor, in denen für jedes identifizierte Objekt ein Objektumriss spezifiziert ist, der Eckpunkte mit zweidimensionalen bzw. dreidimensionalen Positionen und Liniensegmente (bei zweidimensionalen Bilddaten) bzw. Flächensegmente (bei dreidimensionalen Bilddaten) zwischen den Eckpunkten umfasst.

Für digitale Bilddaten, welche extrahierte Objekte spezifizieren, besteht oftmals die Notwendigkeit, die Qualität dieser Bilddaten im Hinblick auf das ursprünglich erfasste Bild bzw. im Hinblick auf das verwendete des Extraktionsverfahrens zu prüfen. Um die Qualität von extrahierten Objekten zu beurteilen, sind aus dem Stand der Technik verschiedene Verfahren bekannt. Zum Beispiel werden Konturvergleiche mittels Konturdeskriptoren oder Regionsdeskriptoren, wie z.B. Bildmomente, eingesetzt. Ferner sind Pixel- und Flächenvergleiche sowie Vergleiche der Eckpunkte von Objekten mittels Abstandsfunktionen, wie z.B. der Hausdorff-Metrik bzw. der Chamfer-Metrik, bekannt. Darüber hinaus kann die Positionsgenauigkeit eines extrahierten Objekts mit Hilfe des mittleren quadratischen Gesamtfehlers (Root Mean Square Error, RMSE) berechnet werden. In den Druckschriften [1] und [2] werden verschiedene Verfahren zum Vergleich von extrahierten Objekten in digitalen Bilddaten beschrieben. Das Dokument [3] offenbart den Vergleich von extrahierten Gebäuden aus Bilddaten der Erdoberfläche.

Die eingangs erwähnten Verfahren zum Vergleich von extrahierten Objekten weisen einige Nachteile auf. Konturvergleiche ziehen nur die Form bzw. die Kontur des extrahierten Objekts in Betracht, wohingegen die Orientierung und Positionsgenauigkeit im Raum nicht berücksichtigt wird. Das Gleiche gilt für Regionsdeskriptoren, da diese teilweise translations-, rotations- oder skalierungsinvariant sind. Pixel- und Flächenbereiche berücksichtigen nur die extrahierte Fläche, aber nicht zwingend deren Form. Bei dem Vergleich von Objekten basierend auf der Hausdorff-Metrik bzw. der Chamfer-Metrik kommt es oftmals zu Problemen, weil die Referenzobjekte in den Referenzdaten, die zum Vergleich mit den extrahierten Objekten herangezogen werden, oftmals detaillierter sind und die Kanten der extrahierten Objekte beim Vergleich nicht in Betracht gezogen werden.

Aufgabe der Erfindung ist es, ein Verfahren zum rechnergestützten Verarbeiten von digitalen Bilddaten zu schaffen, mit dem einfach und zuverlässig die Qualität von in den Bilddaten enthaltenen extrahierten Objekten bestimmt werden kann.

Diese Aufgabe wird durch das Verfahren gemäß dem unabhängigen Patentanspruch 1 gelöst. Weiterbildungen der Erfindung sind in den abhängigen Ansprüchen definiert.

In dem erfindungsgemäßen Verfahren werden digitale Bilddaten verarbeitet, welche ein oder mehrere, aus einem digitalen Bild extrahierte Objekte in einem Raumbereich mit zugeordnetem Koordinatensystem enthalten und in welchen ein jeweiliges Objekt durch einen Objektumriss umfassend Eckpunkte mit zweidimensionalen oder dreidimensionalen Positionen in dem Koordinatensystem und Liniensegmente oder Flächensegmente zwischen den Eckpunkten definiert ist. Je nach Ausgestaltung ist der Raumbereich dabei ein zweidimensionaler oder dreidimensionaler Raumbereich. Entsprechend ist das Koordinatensystem ein zweidimensionales oder dreidimensionales Koordinatensystem. Bei einem zweidimensionalen Raumbereich ist der Objektumriss ein Polygon umfassend Eckpunkte mit zweidimensionalen Positionen und Liniensegmente zwischen den Eckpunkten. Bei einem dreidimensionalen Raumbereich ist der Objektumriss ein Polyeder aus Eckpunkten mit dreidimensionalen Positionen und (ebenen) Flächensegmenten zwischen den Eckpunkten. Die soeben erläuterte Definition der extrahierten Objekte entspricht einer Darstellung als Vektordaten. Das digitale Bild, aus dem die Bilddaten bzw. Objekte extrahiert werden, beschreibt den Raumbereich, der die extrahierten Objekte enthält, über eine Vielzahl von Pixeln mit entsprechenden zweidimensionalen oder dreidimensionalen Informationen in dem oben genannten Koordinatensystem. Dabei ist zu beachten, dass in den extrahierten Bilddaten die einzelnen Positionen der Eckpunkte auch mit einer höheren Genauigkeit als der Auflösung der Pixel beschrieben werden können.

In einer besonders bevorzugten Ausführungsform ist das digitale Bild, aus dem die Bilddaten abgeleitet werden, ein Fernerkundungsbild der Oberfläche eines Himmelskörpers, z.B. eines Planeten oder eines Stern, und insbesondere der Erdoberfläche. Die Pixel des Bildes entsprechen dabei Positionen auf der Oberfläche des Himmelskörpers. Bei 3D-Bilddaten ist dem Pixel ferner eine Information über die Höhe des zugeordneten Punkts auf der Oberfläche in Bezug auf eine Referenzhöhe, z.B. den Meeresspiegel, zugeordnet. Die soeben erläuterten Fernerkundungsbilder werden von einem Flugobjekt aus, wie z.B. einem Flugzeug oder einem Satelliten, erfasst. Als Sensorik zur Bilderfassung können z.B. Lidar-Sensoren, Kameras im optischen Bereich zwischen ultraviolettem Licht und Infrarotlicht oder auch Radarsensoren eingesetzt werden.

Im erfindungsgemäßen Verfahren wird ein jeweiliges extrahiertes Objekt mit einem zugeordneten Referenzobjekt aus Referenzdaten verglichen, wobei das zugeordnete Referenzobjekt im gleichen Koordinatensystem wie die digitalen Bilddaten durch einen Referenzumriss umfassend Eckpunkte mit zweidimensionalen oder dreidimensionalen Positionen in dem Koordinatensystem und Liniensegmente oder Flächensegmente zwischen den Eckpunkten definiert ist. Die Referenzobjekte liegen somit im gleichen Format wie die extrahierten Objekte vor.

Das erfindungsgemäße Verfahren zeichnet sich dadurch aus, dass der Vergleich eines jeweiligen Objekts mit dem zugeordneten Referenzobjekt derart erfolgt, dass für das jeweilige Objekt ein Faktor ermittelt wird, der von einem Abstandsmaß abhängt, welches aus ersten und zweiten minimalen Abständen berechnet wird. Dabei wird für jeden Eckpunkt des jeweiligen Objekts ein minimaler erster Abstand ermittelt, welcher der geringste Abstand des jeweiligen Eckpunkts des jeweiligen Objekts zu dem Referenzumriss des zugeordneten Referenzobjekts ist. Ferner wird für jeden Eckpunkt des zugeordneten Referenzobjekts ein minimaler zweiter Abstand ermittelt, welcher der geringste Abstand des jeweiligen Eckpunkts des zugeordneten Referenzobjekts zu dem Objektumriss des jeweiligen Objekts ist. Der ermittelte Faktor kann dann je nach Ausgestaltung des Verfahrens digital gespeichert werden und/oder über eine Benutzerschnittstelle (z.B. ein Display) ausgegeben werden.

Unter dem oben definierten minimalen Abstand eines Eckpunkts zu dem Objektumriss bzw. Referenzumriss ist dabei der Abstand von dem Eckpunkt zu demjenigen Punkt des Objektumrisses bzw. Referenzumrisses zu verstehen, der dem Eckpunkt am nächsten liegt. Es werden somit nicht nur die Abstände zwischen den Eckpunkten, sondern auch die Abstände von Eckpunkten zu (beliebigen) Punkten des Umrisses betrachtet. Die Punkte des Umrisses sind dabei sowohl die Eckpunkte als auch die Punkte auf den Liniensegmenten bzw. Flächensegmenten.

Der oben definierte Faktor entspricht in einer Variante der Erfindung dem Abstandsmaß. Ebenso kann der Faktor z.B. auch vom Kehrwert des Abstandsmaßes abhängen. In diesem Fall ist dann unter dem Faktor ein Qualitätsfaktor zu verstehen, wobei ein höherer Wert des Qualitätsfaktors ein geringeres Abstandsmaß und damit eine bessere Qualität der Bildextraktion aufgrund höherer Ähnlichkeit zwischen extrahiertem Objekt und Referenzobjekt spezifiziert.

Das erfindungsgemäße Verfahren ermöglicht einen aussagekräftigen Vergleich zwischen extrahierten Objekten und Referenzobjekten in digitalen Bilddaten mittels eines neuartigen Abstandsmaßes. Dieses Abstandsmaß berücksichtigt sowohl die Genauigkeit der Kontur des Objekts als auch die Genauigkeit seiner Position. Zusätzliche Details in den Referenzdaten haben dabei einen geringen Einfluss auf das Abstandsmaß, wodurch das Verfahren gegenüber herkömmlichen Verfahren mit Abstandsfunktionen robuster wird.

Im Falle, dass die verarbeiteten digitalen Bilddaten zweidimensionale Bilddaten sind, sind die Objekte und Referenzobjekte jeweils durch einen Objektumriss bzw. einen Referenzumriss umfassend Eckpunkte mit zweidimensionalen Positionen und Liniensegmente zwischen den Eckpunkten definiert, wobei als jeweiliger erster minimaler Abstand der geringste Abstand zwischen einem jeweiligen Eckpunkt des jeweiligen Objekts und einem Liniensegment des Referenzumrisses des zugeordneten Referenzobjekts ermittelt wird und wobei als jeweiliger zweiter minimaler Abstand der geringste Abstand zwischen einem jeweiligen Eckpunkt des zugeordneten Referenzobjekts und einem Liniensegment des Objektumrisses des jeweiligen Objekts ermittelt wird.

Im Falle von 3D-Bilddaten werden die Objekte und Referenzobjekte jeweils durch einen Objektumriss bzw. Referenzumriss umfassend Eckpunkte mit dreidimensionalen Positionen und (ebene) Flächensegmente zwischen den Eckpunkten beschrieben, wobei als jeweiliger erster minimaler Abstand der geringste Abstand zwischen einem jeweiligen Eckpunkt des jeweiligen Objekts und einem Flächensegment des Referenzumrisses des zugeordneten Referenzobjekts ermittelt wird und wobei als jeweiliger zweiter minimaler Abstand der geringste Abstand zwischen einem jeweiligen Eckpunkt des zugeordneten Referenzobjekts und einem Flächensegment des Objektumrisses des jeweiligen Objekts ermittelt wird.

In einer bevorzugten Ausführungsform ist das im erfindungsgemäßen Verfahren verwendete Abstandsmaß eine Metrik in dem Sinne, dass sie positiv-definit und symmetrisch ist und die Dreiecksungleichung erfüllt. Diese Bedingungen werden nochmals in der detaillierten Beschreibung näher definiert. In einer weiteren, besonders bevorzugten Ausführungsform sind die ersten und zweiten minimalen Abstände euklidische Abstände.

In einer Variante der Erfindung enthält das Abstandsmaß eine Summe aus ersten und zweiten Abständen und insbesondere eine gewichtete Summe. In einer bevorzugten Ausführungsform ist die gewichtete Summe derart ausgestaltet, dass alle ersten Abstände mit einem identischen ersten Gewichtungsfaktor und alle zweiten Abstände mit einem identischen zweiten Gewichtungsfaktor gewichtet sind. Insbesondere ist der erste Gewichtungsfaktor von dem Kehrwert der Anzahl von Eckpunkten des jeweiligen Objekts abhängig und/oder der zweite Gewichtungsfaktor ist von dem Kehrwert der Anzahl von Eckpunkten des zugeordneten Referenzobjekts abhängig. Auf diese Weise wird ein Abstandsmaß definiert, welches insgesamt die durchschnittliche Unähnlichkeit pro Eckpunkt des jeweiligen Objekts und Referenzobjekts wiedergibt.

Vorzugsweise lautet das im erfindungsgemäßen Verfahren verwendete Abstandsmaß p(A, B) wie folgt:

$$p\left(A,B\right) = \frac{1}{2q}\sum_{j=1}^{q}\min_{b\in\partial B}\left\|a_j - b\right\| + \frac{1}{2r}\sum_{k=1}^{r}\min_{a\in\partial A}\left\|b_k - a\right\|$$

wobei $\|\cdot\|$ die Euklidische Distanz ist;

wobei $a_j$, j=1, ..., q ein Eckpunkt des Objektumrisses $\partial A$ des jeweiligen Objekts ist und dabei q der Anzahl der Eckpunkte des Objektumrisses $\partial A$ entspricht; wobei $a \in \partial A$ die Punkte auf dem Objektumriss $\partial A$ (d.h. die Eckpunkte und die Punkte auf den Linien- oder Flächensegmenten des Objektumrisses) repräsentiert; wobei $b_k$, k=1, ..., r ein Eckpunkt des Referenzumrisses $\partial B$ des Referenzobjekts ist und dabei r der Anzahl der Eckpunkte des Referenzumrisses $\partial B$ entspricht; wobei $b \in \partial B$ die Punkte auf dem Referenzumriss $\partial B$ (d.h. die Eckpunkte und die Punkte auf den Linien- oder Flächensegmenten des Referenzumrisses) repräsentiert.

Wie bereits oben erwähnt, eignet sich das Verfahren insbesondere für digitale Bilddaten, die extrahierte Objekte aus einem Fernerkundungsbild enthalten. In einem besonders bevorzugten Ausführungsbeispiel sind die Objekte dabei Bauwerke und insbesondere Gebäude auf der Erdoberfläche, welche mit Referenzobjekten in der Form von Bauwerken und insbesondere Gebäuden auf der Erdoberfläche verglichen werden. Die Referenzobjekte können dabei z.B. aus Katasterdaten stammen.

Neben dem oben beschriebenen Verfahren betrifft die Erfindung ferner ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Darüber hinaus betrifft die Erfindung ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ausführungsbeispiele der Erfindung werden nachfolgend anhand der beigefügten Figuren detailliert beschrieben.

Es zeigen:

Fig. 1 einen Satz von Diagrammen, welche die Bestimmung eines Abstandsmaßes basierend auf der Hausdorff-Metrik, der Chamfer-Metrik sowie einer Variante der erfindungsgemäßen Metrik verdeutlichen;

Fig. 2 einen weiteren Satz von Diagrammen, die nochmals eine Variante des erfindungsgemäßen Abstandsmaßes mit der Hausdorff- bzw. Chamfer-Metrik vergleichen;

Fig. 3 eine Darstellung, welche die Veränderung des Abstandsmaßes bei Hinzufügen von Punkten auf einem Polygon für eine Variante der erfindungsgemäßen Metrik sowie die Hausdorff-Metrik und Chamfer-Metrik wiedergibt;

Fig. 4 digitale Bilddaten basierend auf einem Fernerkundungsbild, welche mit einer Variante des erfindungsgemäßen Verfahrens verarbeitet werden; und

Fig. 5 einen Satz von Diagrammen, die anhand der Bilddaten von Fig. 4 den Vergleich von Objekten mit Referenzobjekten basierend auf dem erfindungsgemäßen Verfahren sowie basierend auf der Hausdorff- bzw. Chamfer-Metrik verdeutlichen.

Die nachfolgend erläuterte Variante des erfindungsgemäßen Verfahrens verwendet als Ausgangspunkt digitale Bilddaten, die aus einem digitalen Bild abgeleitet sind. Das digitale Bild ist vorzugsweise ein Fernerkundungsbild, das einen Bereich der Erdoberfläche in der Form einer Vielzahl von Pixeln wiedergibt, wobei der Ort der Pixel in dem Bild eine entsprechende Position auf der Ebene der Erdoberfläche repräsentiert. Ferner existieren zu den einzelnen Pixeln Informationen, welche die Höhe des dem Pixel entsprechenden Punkts auf der Erdoberfläche repräsentieren. Nichtsdestotrotz ist das hier beschriebene Verfahren auch auf beliebige andere zweidimensionale oder dreidimensionale Bildaufnahmen anwendbar.

Die im Folgenden betrachteten Bilddaten enthalten Objekte in der Form von bestimmten Strukturen, die aus dem digitalen Bild extrahiert sind. Weiter unten wird ein Beispiel erläutert, bei dem die extrahierten Objekte Gebäude darstellen. Im Folgenden sind die Bilddaten dabei zweidimensionale Bilddaten, welche die extrahierten Objekte über Polygone mit einem Satz von Eckpunkten und Liniensegmenten zwischen diesen Eckpunkten spezifizieren. Die Bilddaten enthalten somit Vektordaten zu den entsprechenden extrahierten Objekten.

Ziel des hier beschriebenen Verfahrens ist es nunmehr, die Qualität der Bilddaten dahingehend zu ermitteln, ob die extrahierten Objekte sehr gut mit entsprechenden Referenzobjekten aus Referenzbilddaten übereinstimmen. Dabei ist bekannt, dass die digitalen Bilddaten zumindest teilweise den gleichen Raumbereich wie die Referenzdaten betreffen. Die Referenzdaten stellen dabei z.B. Katasterdaten mit den darin enthaltenen Referenzobjekten in der Form von Gebäuden dar, wobei die Referenzobjekte in gleicher Weise wie die Objekte in den Bilddaten über Polygone mit Eckpunkten und dazwischen liegenden Liniensegmenten repräsentiert werden.

Als Ergebnis der hier beschriebenen Ausführungsform des erfindungsgemäßen Verfahrens werden Abstandsmaße ausgegeben, welche ein jeweiliges Objekt in den digitalen Bilddaten mit einem Referenzobjekt aus den digitalen Referenzdaten vergleicht. Je größer das Abstandsmaß ist, desto größer sind die Unterschiede zwischen Objekt und Referenzobjekt. Dies lässt Rückschlüsse auf die Qualität der Rohdaten bzw. der durchgeführten Objektextration zu. Bei zu großen Abstandsmaßen kann beispielsweise eine Meldung ausgegeben werden, woraufhin ein Benutzer die extrahierten Objekte in den Daten manuell nachbearbeiten kann bzw. die Bilddaten zur weiteren Verwendung verwerfen kann. Das Verfahren stellt somit eine Qualitätskontrolle für Informationen aus digitalen Bilddaten dar.

Bevor das erfindungsgemäße Verfahren näher erläutert wird, werden zunächst aus dem Stand der Technik bekannte Abstandsmaße bzw. Metriken zum Vergleich von Objekten mit Referenzobjekten erläutert. Diese bekannten Abstandsmaße werden dann mit dem Abstandsmaß verglichen, das in der hier beschriebenen Variante des erfindungsgemäßen Verfahrens eingesetzt wird.

Bevor die Abstandsmaße näher erläutert werden, wird zunächst der Begriff der Metrik im mathematischen Sinne erklärt. Im Folgenden bezeichnet S einen Satz von Objekten. Eine Metrik $m$ auf diesem Satz $S$ ist eine Distanzfunktion $m : S \times S \mapsto \mathbb{R}$. Für alle $x, y, z \in S$ erfüllt die Metrik bzw. Distanzfunktion $m$ die folgenden Bedingungen:

$$m(x,y) \geq 0 \text{ und}$$

$$m(x,y) = 0 \Leftrightarrow x = y \tag{1}$$

$$m(x,y) = m(y,x) \tag{2}$$

$$m(x,y) + m(x,z) \geq m(y,z) \tag{3}$$

Alle drei obigen Bedingungen (1), (2) und (3) müssen für eine Metrik erfüllt sein. Die Bedingung (1) betrifft die positive Definitheit der Metrik, die Bedingung (2) die Symmetrie der Metrik und die Bedingung (3) die Erfüllung der Dreiecksungleichung.

Die nachfolgend erläuterten Abstandsmaße bzw. Metriken beruhen auf dem Euklidischen Abstand, der mit $\|\cdot\|$ bezeichnet ist und durch eine Funktion $e : \mathbb{R}^n \times \mathbb{R}^n \mapsto \mathbb{R}$ beschrieben ist, welche wie folgt lautet:

$$e(x,y) = \|x - y\| = \left( \sum_{i=1}^{n} (x_i - y_i)^2 \right)^{\frac{1}{2}}, x, y \in \mathbb{R}^n.$$

Im Folgenden werden als Objekt O ein Satz von Punkten A und als Referenzobjekt R ein Satz von Punkten B betrachtet. Jeder Satz von Punkten stellt dabei die Eckpunkte eines Polygons dar. Mit anderen Worten umfasst das Objekt O die Eckpunkte $a_j \in A$, $j = 1, ..., q$ und das Referenzobjekt die Eckpunkte $b_k \in B$, $k = 1,...,r$. Der Euklidische Abstand $e(a_j, b_k)$ zwischen dem Objekt mit dem Satz von Punkten A und dem Referenzobjekt mit dem Satz von Punkten B kann berechnet werden, falls Punkte aus beiden Sätzen einander zugeordnet werden können. Da dies für das Objekt und das Referenzobjekt nicht immer der Fall ist (d.h. $q \neq r$), gibt es Abstandsmaße, welche auch Objekte mit einer unterschiedlichen Anzahl von Punkten vergleichen können.

Ein erstes, aus dem Stand der Technik bekanntes Abstandsmaß ist die gerichtete Hausdorff-Distanz, welche den maximalen euklidischen Abstand zwischen jedem Eckpunkt $a_j \in A$ des Objekts O und dem nächstliegenden Eckpunkt $b_k \in B$ des Referenzobjekts R spezifiziert. Diese Hausdorff-Distanz ist somit durch folgende Gleichung gegeben:

$$\vec{h}\left(A,B\right) = \max_{a_j \in A}\ \min_{b_k \in B}\left\|a_j - b_k\right\|. \qquad (4)$$

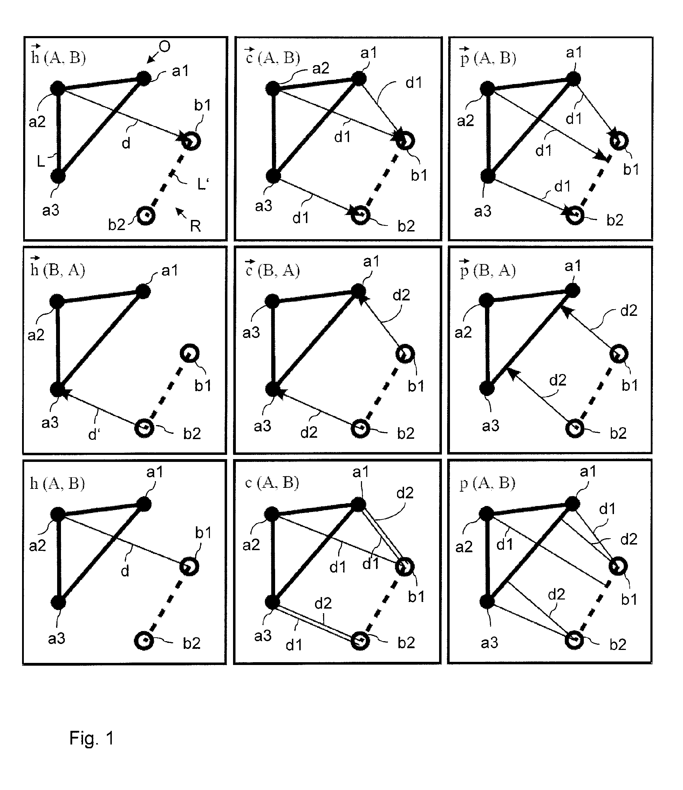

Die Bestimmung der Hausdorff-Distanz sowie der weiter unten erläuterten Chamfer-Distanz und einer Variante der erfindungsgemäßen Distanz ist in dem Satz der Diagramme der Fig. 1 verdeutlicht. Die drei Diagramme in der linken Spalte der Fig. 1 zeigen die Bestimmung der Hausdorff-Distanz. In allen dargestellten Diagrammen wird dabei ein Objekt O in der Form von einem Polygon mit den drei schwarzen Eckpunkten a1, a2, und a3 betrachtet. Die Linien zwischen den Eckpunkten sind durch dicke Liniensegmente wiedergegeben, wobei nur eines der Liniensegmente aus Übersichtlichkeitsgründen mit dem Bezugszeichen L versehen ist. Das Referenzobjekt, welches mit dem Objekt O verglichen wird, ist mit dem Bezugszeichen R bezeichnet und umfasst die beiden weißen Eckpunkte b1 und b2 sowie ein einzelnes Liniensegment L', welches als dicke gestrichelte Linie dargestellt ist. Aus Übersichtlichkeitsgründen werden die Bezugszeichen O, R, L und L' nur im linken oberen Diagramm verwendet, sie gelten aber analog auch für die anderen Diagramme. Die Rolle von Objekt O und Referenzobjekt R in Fig. 1 ist lediglich beispielhaft. Ggf. können die Rollen auch vertauscht sein.

Als gerichtete Hausdorff-Distanz zwischen den Objekten O und R wird gemäß dem oberen linken Diagramm der euklidische Abstand zwischen den Punkten a2 und b1 ermittelt, da dies der größte Abstand eines Eckpunkts des Objekts O zum nächstliegenden Eckpunkt des Referenzobjekts R ist. Dieser Abstand ist durch einen dünnen Pfeil dargestellt und wird mit dem Bezugszeichen d bezeichnet.

Eine weitere, aus dem Stand der Technik bekannte Distanz ist die sog. gerichtete Chamfer-Distanz $\vec{c}(A,B)$, welche die Summe der euklidischen Distanzen zwischen jedem Eckpunkt $a_j \in A$ des Objekts O und seinem nächstliegenden Eckpunkt $b_k \in B$ repräsentiert. Die gerichtete Chamfer-Distanz ist somit durch folgende Gleichung gegeben:

$$\vec{c}\left(A,B\right) = \sum_{a_j \in A}\ \min_{b_k \in B}\left\|a_j - b_k\right\|. \qquad (5)$$

Die Bestimmung der gerichteten Chamfer-Distanz ist in dem oberen mittleren Diagramm der Fig. 1 wiedergegeben. Es wird dabei für jeden Eckpunkt des Objekts O der Abstand zum nächstgelegenen Eckpunkt des Referenzobjekts R bestimmt. Diese Abstände sind in dem oberen mittleren Diagramm mit d1 bezeichnet und wiederum durch dünne Pfeile wiedergegeben. Weder die gerichtete Hausdorff-Distanz noch die gerichtete Chamfer-Distanz erfüllen die obige Symmetrie-Bedingung (2). Deshalb stellen sie keine Metrik im mathematischen Sinne dar. Um die obigen Bedingungen (1) bis (3) einer Metrik zu erfüllen, wird deshalb die symmetrierte Hausdorff-Distanz durch die Berechnung des Maximums der gerichteten Hausdorff-Distanzen ausgehend vom Objekt O zum Referenzobjekt R und ausgehend vom Referenzobjekt R zum Objekt O ermittelt. In Fig. 1 ist dabei im linken Diagramm der zweiten Zeile die Bestimmung der gerichteten Hausdorff-Distanz vom Referenzobjekt R zum Objekt O wiedergegeben. Diese Distanz ist mit d' bezeichnet und stellt den Abstand zwischen den Punkten b2 und a3 dar. Sie ist durch einen dünnen Pfeil dargestellt. Die symmetrierte Hausdorff-Distanz, die im Folgenden nur als Hausdorff-Distanz oder Hausdorff-Metrik bezeichnet wird, ist der Maximalwert der Distanzen d und d'. Die Hausdorff-Distanz ist dabei im linken unteren Diagramm wiedergegeben und entspricht der längeren Distanz d aus dem oberen linken Diagramm. Mathematisch kann die Hausdorff-Distanz wie folgt beschrieben werden:

$$h\left(A,B\right) = \max\left\{\vec{h}\left(A,B\right),\vec{h}\left(B,A\right)\right\}. \qquad (6)$$

In Analogie kann die symmetrierte Chamfer-Distanz durch Summation der normalisierten gerichteten Chamfer-Distanzen wie folgt berechnet werden:

$$c\left(A,B\right) = \frac{1}{2q}\vec{c}\left(A,B\right) + \frac{1}{2r}\vec{c}\left(B,A\right). \qquad (7)$$

Dies entspricht der Berechnung des Mittelwerts zwischen der gerichteten Distanz $\vec{c}(A,B)$ und der gerichteten Distanz $\vec{c}(B,A)$. In Fig. 1 ist die Berechnung der gerichteten *Chamfer-Distanz* $\vec{c}(B,A)$ in dem mittleren Diagramm der zweiten Zeile wiedergegeben. Dabei wird über die Abstände der Eckpunkte b1 und b2 des Referenzobjekts R zum jeweiligen nächstgelegenen Eckpunkt des Objekts O summiert. Diese Abstände sind mit d2 bezeichnet. Im mittleren Diagramm der untersten Zeile der Fig. 1 ist ferner die Berechnung der symmetrierten Chamfer-Distanz gemäß obiger Gleichung (7) wiedergegeben. Diese Distanz wird im Folgenden einfach als Chamfer-Distanz bzw. Chamfer-Metrik bezeichnet. Das mittlere Diagramm der untersten Zeile gibt dabei alle Abstände d1 und d2 aus den beiden darüber liegenden Diagrammen wieder, welche in der Summation zur Ermittlung der Chamfer-Distanz berücksichtigt werden.

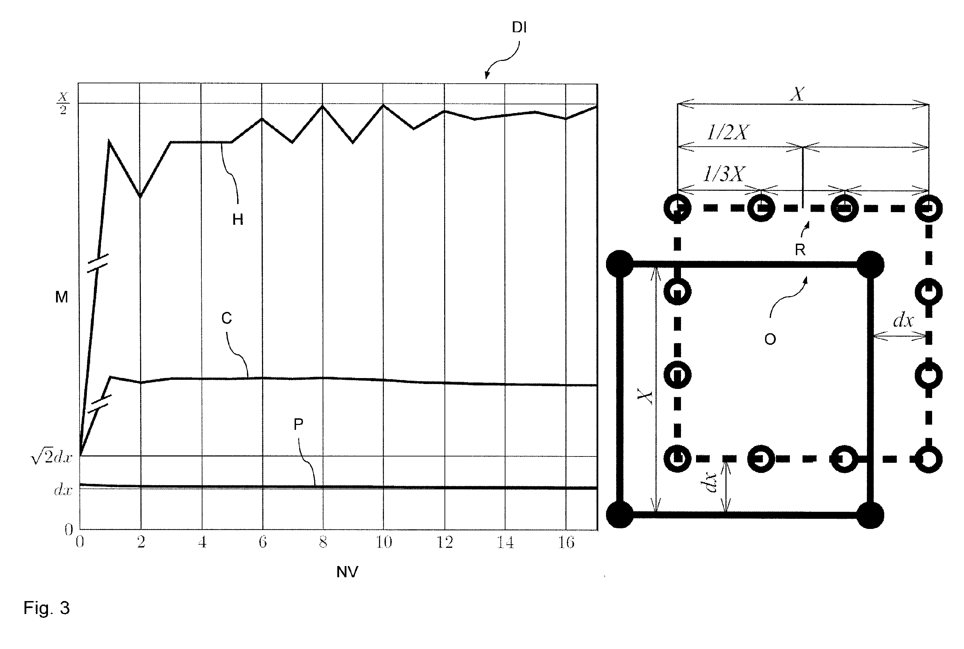

Die Hausdorff-Distanz ist ein Maß für die größte Unähnlichkeit zwischen zwei, durch einen Satz von Eckpunkten repräsentierten Polygonen. Demzufolge ist sie sensitiv für Ausreißer. Demgegenüber spezifiziert die Chamfer-Distanz die durchschnittliche Gesamtunähnlichkeit der Punktesätze von zwei Polygonen. Ein Nachteil der Hausdorff- und Chamfer-Distanz besteht darin, dass sie sensitiv auf zusätzliche Punkte auf den Liniensegmenten der Polygone sind (siehe Fig. 3 weiter unten) und ein nicht-monotones Verhalten aufweisen. Erfindungsgemäß wurde deshalb ein anderes Abstandsmaß zum Vergleich von extrahierten Objekten in Bildern verwendet, welches im Folgenden auch als PoLiS-Distanz bzw. PoLiS-Metrik bezeichnet wird. Diese Metrik berücksichtigt beim Vergleich von Objekten nicht nur die Eckpunkte der Polygone, sondern auch die dazwischen liegenden Liniensegmente.

Zur Erklärung der PoLiS-Metrik wird wiederum ein Objekt O in der Form eines Polygons mit Eckpunkten $a_j$ eines Punktesatzes A betrachtet. Das Objekt kann z.B. der Umriss eines Gebäudes sein, der aus einem Fernerkundungsbild der Erdoberfläche extrahiert wurde. Das Polygon wird durch die Reihe der aufeinander folgenden Eckpunkte des Punktesatzes A repräsentiert, wobei der erste Eckpunkt und der letzte Eckpunkt der Reihe zusammenfallen, d.h. es gilt $a_1 = a_{q+1}$, $j = 1, ..., q + 1$. Dabei entspricht q der Anzahl der Eckpunkte des Polygons. Der Rand bzw. Umriss $\partial A$ des Objekts, das durch das Polygon repräsentiert wird, umfasst die Eckpunkte des Polygons sowie die Punkte, die auf den Liniensegmenten liegen, welche die Eckpunkte entsprechend der Nummerierung von 1 bis q verbinden. Im Folgenden repräsentiert somit ein Punkt des Polygons einen beliebigen Punkt mit definierten Koordinaten entlang des Rands des Polygons, wobei dieser beliebige Punkt auch ein Eckpunkt sein kann. Ein solcher beliebiger Punkt wird bezeichnet durch $a \in \partial A$, ohne dass ein Index für diesen Punkt verwendet wird. In gleicher Weise wird ein beliebiger Punkt des Punktesatzes B eines Polygons für ein entsprechendes Referenzobjekt R als $b \in \partial B$ bezeichnet.

Die gerichtete PoLiS-Distanz $\vec{p}(A,B)$ zwischen einem Objekt O, das durch ein Polygon mit dem Punktesatz A repräsentiert wird, und einem Referenzobjekt R, das durch ein Polygon mit dem Punktesatz B repräsentiert wird, ist definiert als der Mittelwert der Distanzen zwischen jedem Eckpunkt $a_j$ des Polygons des Objekts O und seinem nächstliegenden Punkt $b \in \partial B$ auf dem Polygon des Referenzobjekts R. Mit anderen Worten lautet die gerichtete PoLiS-Distanz wie folgt:

$$\vec{p}(A, B) = \frac{1}{q} \sum_{a_j \in A} \min_{b \in \partial B} \left\| a_j - b \right\| \qquad (8)$$

Die gerichtete PoLiS-Distanz $\bar{p}$ wird wiederum symmetriert, indem die gerichteten Distanzen summiert werden, ähnlich zu obigen Gleichungen (6) und (7). Insgesamt ergibt sich somit die symmetrierte PoLiS-Distanz bzw. PoLiS-Metrik wie folgt:

$$p(A, B) = \frac{1}{2q} \sum_{a_j \in A} \min_{b \in \partial B} \left\| a_j - b \right\| + \frac{1}{2r} \sum_{b_k \in B} \min_{a \in \partial A} \left\| b_k - a \right\| \qquad (9)$$

Die Normalisierungsfaktoren $\frac{1}{2q}$ und $\frac{1}{2r}$ ermöglichen es, dass die durchschnittliche Gesamtunähnlichkeit pro Punkt quantifiziert wird, wie dies auch für die Chamfer-Distanz (siehe Gleichung (7)) der Fall ist. Die Einheit einer PoLiS-Metrik entspricht den Einheiten, welche für die Positionen der Eckpunkte verwendet werden. In dem hier beschriebenen Fall eines Fernerkundungsbilds sind diese Einheiten vorzugsweise in Metern angegeben. Die gemäß Gleichung (9) erhaltene PoLiS-Metrik ist auch eine Metrik im mathematischen Sinne, d.h. sie erfüllt die obigen Bedingungen (1) bis (3).

Das oberste rechte Diagramm der Fig. 1 zeigt nochmals die Ermittlung der obigen gerichteten PoLiS-Distanz $\vec{p}(A, B)$ für das Objekt O und das Referenzobjekt R. Die dabei summierten Abstände sind mit d1 gekennzeichnet und durch dünne Pfeile wiedergegeben. Analog ist im mittleren rechten Diagramm die Ermittlung der gerichteten PoLiS-Distanz $\vec{p}(B,A)$ gezeigt, bei der Objekt und Referenzobjekt vertauscht sind. Die dabei berücksichtigten Abstände sind mit d2 bezeichnet und durch dünne Pfeile wiedergegeben. Wie man aus dem oberen rechten und dem mittleren rechten Diagramm erkennt, umfassen die Abstände d1 und d2 nunmehr nicht nur Abstände zu Eckpunkten, sondern auch zu Punkten auf den Liniensegmenten, wobei diese Punkte jeweils durch das Lot auf das Liniensegment ausgehend von einem entsprechenden Eckpunkt des Objekts bzw. Referenzobjekts definiert sind. Das untere rechte Diagramm der Fig. 1 zeigt die Ermittlung der PoLiS-Metrik $p(A,B)$ unter Verwendung der beiden gerichteten PoLiS-Distanzen $\vec{p}(A,B)$ und $\vec{p}(B,A)$. Alle dabei berücksichtigten Abstände d1 und d2 sind in diesem Diagramm eingezeichnet.

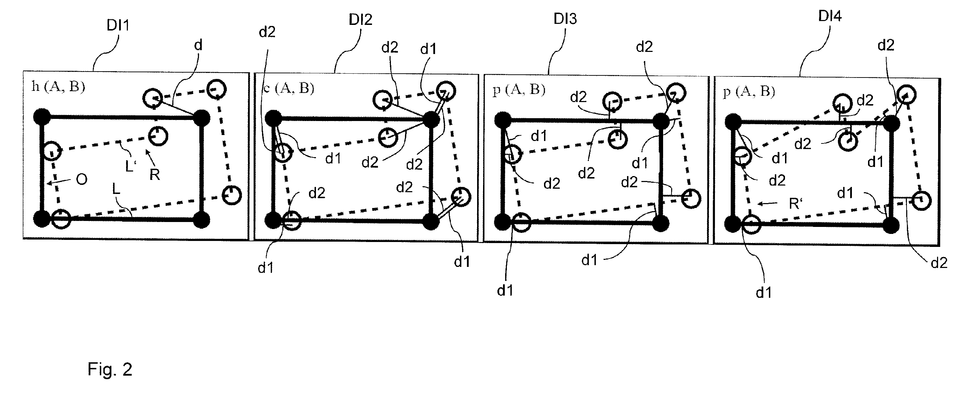

Fig. 2 verdeutlicht nochmals an einem weiteren Satz von Diagrammen DI1 bis DI4 die Ermittlung der PoLiS-Metrik im Vergleich zu der bekannten Hausdorff-Metrik und Chamfer-Metrik. Analog zu Fig. 1 ist dabei das Objekt mit Bezugszeichen O bezeichnet und durch schwarze Kreise als Eckpunkte sowie dicke durchgezogene Linien L dargestellt. Demgegenüber ist das Referenzobjekt R durch gestrichelte Linie L' sowie weiße Eckpunkte gekennzeichnet. Aus Übersichtlichkeitsgründen sind die Eckpunkte in den Diagrammen DI1 bis DI4 nicht mit Bezugszeichen versehen. Ferner werden die Bezugszeichen R, O, L und L' nur im ersten Diagramm DI1 verwendet. Im Unterschied zu Fig. 1 ist das Objekt O nunmehr ein Polygon in der Form eines Rechtecks mit vier Eckpunkten, wohingegen das Referenzobjekt R ein Polygon mit sechs Eckpunkten ist. In dem Diagramm DI1 ist mit der Linie d die ermittelte Hausdorff-Distanz wiedergegeben. In dem Diagramm DI2 sind durch Linien alle Distanzen d1 und d2 dargestellt, welche im Rahmen der Ermittlung der Chamfer-Distanz berücksichtigt werden. Das Diagramm DI3 zeigt alle Abstände d1 und d2, die im Rahmen der Ermittlung der erfindungsgemäßen PoLiS-Metrik verwendet werden. Die Hausdorff-Distanz und die Chamfer-Distanz gemäß den Diagrammen DI1 und DI2 hängen dabei nur von Positionen der Eckpunkte der Polygone und nicht von den dazwischen liegenden Liniensegmenten ab. Dies ist bei der PoLiS-Metrik nicht der Fall, was anhand von Diagramm DI4 verdeutlicht wird.

In dem Diagramm DI4 ist ein alternatives Referenzobjekt R' wiedergegeben, welches die gleichen Eckpunkte wie das Referenzobjekt R der Diagramme DI1 bis DI3 aufweist. Jedoch sind die Verbindungen zwischen den Eckpunkten unterschiedlich. Demgegenüber wird im Diagramm DI4 das gleiche Objekt O wie in den Diagrammen DI1 bis DI3 zum Vergleich herangezogen. Wie man aus dem Diagramm DI4 erkennt, ist der Abstand d1, der vom oberen rechten Eckpunkt des Objekts O zum Referenzobjekts R' führt, unterschiedlich zu dem entsprechenden Abstand d1 im Diagramm DI3. Hieraus wird klar ersichtlich, dass eine Abhängigkeit der bei der PoLiS-Metrik berücksichtigten Abstände von den Liniensegmenten besteht, d.h. die PoLiS-Metrik berücksichtigt neben der Position der Eckpunkte auch die Position der Liniensegmente zwischen den Eckpunkten.

Nachfolgend ist nochmals ein Pseudocode wiedergegeben, der die Berechnung der PoLiS-Metrik in der hier beschriebenen Ausführungsform verdeutlicht. In dem Pseudocode sind Kommentare durch die vorangestellten Symbole "//" gekennzeichnet.

```
1: procedure POLISMETRICA(A,B)
2:     p1, p2 ← 0
3:     for j=1,..., q do          // für jeden Punkt a_j ∈ A
4:         for k=1,..., r do                  // b_k, b_{k+1} ∈ B
5:             p1 ← p2 + DISTPT2LNSG(a_j, b_k, b_{k+1})
6:         end for
7:     end for
8:     for k=1,...,r do           // für jeden Punkt b_k ∈ B
9:         for j=1,...,1 do                  // a_j, a_{j+1} ∈ A
10:            p2 ← p2 + DISTPT2LNSG(b_k, a_j, a_{j+1})
11:        end for
12:    end for
13:    p ← p1/(2q) + p2/(2r)
14:    return p                   // PoLiS-Distanzwert
15: end procedure
```

Gemäß dem obigen Pseudocode wird zunächst die gerichtete PoLiS-Distanz $\vec{p}(A,B)$ berechnet (Zeilen 3 bis 7). Anschließend wird die gerichtete PoLiS-Distanz $\vec{p}(B,A)$ ermittelt (Zeilen 8 bis 12). Die Summation gemäß obiger Gleichung (9) erfolgt in Zeile 13. Die im obigen Pseudocode enthaltene Prozedur DISTPT2LNSG in Zeilen 5 und 10 ermittelt die Distanz zwischen einem Eckpunkt ($a_j$ bzw. $b_k$) und einem Liniensegment, das durch zwei Eckpunkte ($b_k$ und $b_{k+1}$ bzw. $a_j$ und $a_{j+1}$) repräsentiert wird. Hier ist zu beachten, dass in den Zeilen 5 und 10 die über die Prozedur DISTPT2LNSG ermittelte Distanz immer nur dann zu p1 bzw. p2 hinzuaddiert ist, wenn sie die kürzeste Distanz für einen vorbestimmten Eckpunkt ($a_j$ bzw. $b_k$) ist.

Fig. 3 verdeutlicht nochmals die Sensitivität der Hausdorff-Metrik, der Chamfer-Metrik sowie der PoLiS-Metrik in Bezug auf eine Veränderung der Anzahl von Eckpunkten des Polygons eines Objekts O bzw. eines Referenzobjekts R. Gemäß dem rechten Teil der Fig. 3 ist das Referenzobjekt R ein Quadrat, welches neben den tatsächlichen Punkten in den Ecken weitere Eckpunkte enthält, welche die Seiten des Quadrats nochmals in Liniensegmente unterteilen. Das Referenzobjekt ist dabei wiederum mit weißen Punkten und gestrichelten Linien wiedergegeben. Beispielhaft sind dabei für jede Seite des Quadrats vier Eckpunkte wiedergegeben. Die Länge jeder Seite ist mit X bezeichnet. Versetzt zu dem Referenzobjekt R ist das Objekt O durch durchgezogene Liniensegmente und schwarze Eckpunkte dargestellt. Das Objekt O stellt im Umriss das gleiche Quadrat wie das Referenzobjekt R dar. Es ist jedoch nach links und unten um den Abstand dx versetzt, der wesentlich kleiner als die Länge X ist.

Gemäß dem Diagramm DI im linken Teil der Fig. 3 werden sukzessive ausgehend von einem Referenzobjekt R, welches nur die vier Punkte in den Ecken als Eckpunkte enthält, weitere Eckpunkte auf den Kanten symmetrisch hinzugefügt. Entlang der Abszisse ist die Anzahl NV der hinzugefügten Eckpunkte pro Kante wiedergegeben. Das entsprechende Referenzobjekt wird anschließend über die genannten Metriken mit dem Objekt O verglichen, d.h. es werden die entsprechenden Werte der Metriken ermittelt. Diese Werte sind entlang der Abszisse M wiedergegeben. Durch die Linie H wird dabei die Veränderung der Hausdorff-Distanz, durch die Linie C die Veränderung der Chamfer-Distanz und durch die Linie P die Veränderung der PoLiS-Metrik repräsentiert. Wie man anschaulich erkennt, bleibt die PoLiS-Metrik unabhängig von der Anzahl der hinzugefügten Eckpunkte im Wesentlichen konstant, wohingegen die Hausdorff-Metrik und die Chamfer-Metrik Schwankungen unterliegen. Die PoLiS-Metrik ist somit nur durch die Form des Umrisses des betrachteten Objekts bzw. Referenzobjekts bestimmt und hängt nicht davon ab, an welchen Stellen Eckpunkte in den Umriss eingefügt werden.

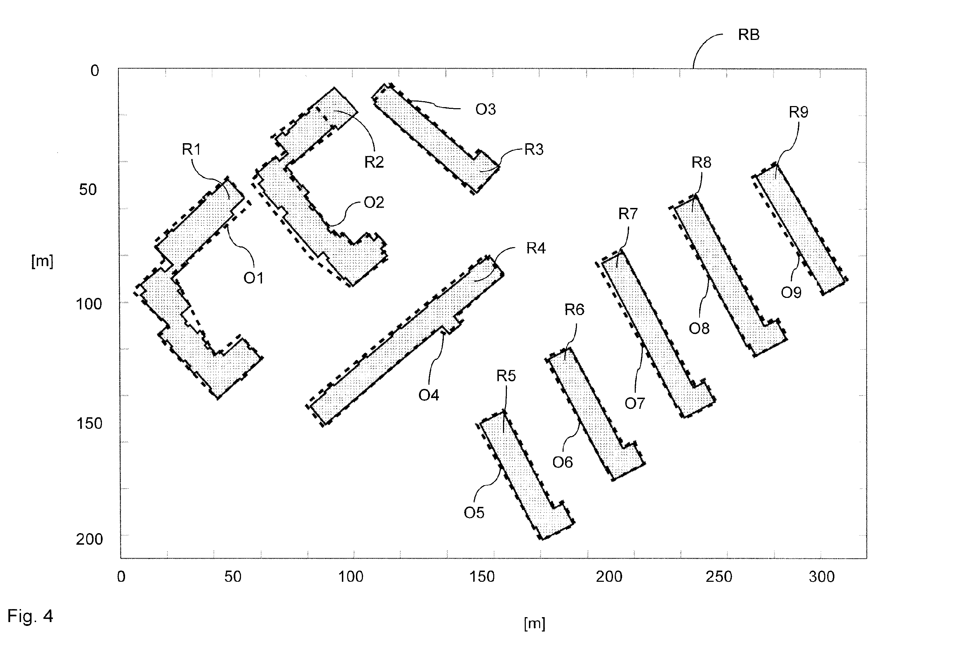

Die im Vorangegangenen beschriebene PoLiS-Metrik wurde anhand von realen Bilddaten getestet. Die realen Bilddaten umfassen dabei Gebäudeumrisse, die aus einem DSM-Modell (DSM = Digital Surface Model, digitales Oberflächenmodell) eines digitalen Fernerkundungsbilds extrahiert wurden. Das Fernerkundungsbild wurde dabei mit einem Lidar-Sensor aufgenommen. Fig. 4 zeigt die entsprechenden Bilddaten, die einem zweidimensionalen Raumbereich RB entsprechen, der einen Ausschnitt aus einem Fernerkundungsbild der Stadt München repräsentiert. Die Positionen entlang der Abszisse und Ordinate der Fig. 4 sind in Metern angegeben. Die aus dem Raumbereich RB extrahierten Objekte, welche Gebäudeumrisse darstellen, sind in Fig. 4 mit O1, 02, 03, ..., 09 bezeichnet und werden durch gestrichelte Umrisse repräsentiert. Diese Objekte werden mit entsprechenden Referenzobjekten R1, R2, ..., R9 verglichen, wobei diese Referenzobjekte zur Unterscheidung gegenüber den anderen Objekten O1 bis 09 als durchgezogene Linien mit gepunkteter Füllung wiedergegeben sind.

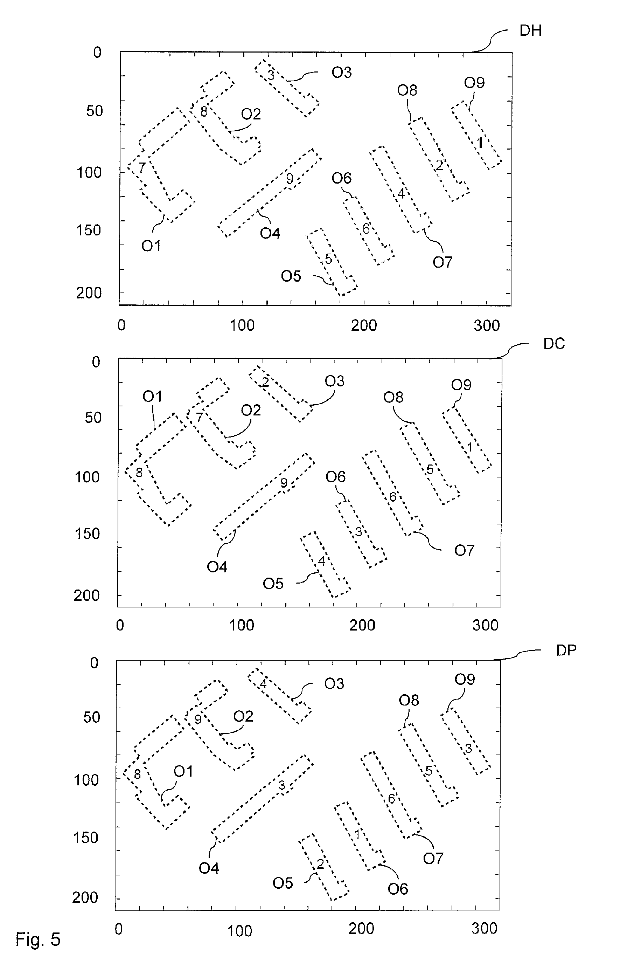

Für die Bilddaten gemäß Fig. 4 wurden die einzelnen Objekte O1 bzw. 09 jeweils mit den entsprechenden Referenzobjekten R1 bis R9 verglichen, indem die Hausdorff-Distanzen, Chamfer-Distanzen und PoLiS-Distanzen ermittelt wurden. Dies wird anhand von Fig. 5 verdeutlicht, in der in den drei Diagrammen DH, DC und DP nochmals die Objekte aus den Bilddaten der Fig. 4 wiedergegeben sind, wobei die einzelnen Objekte jeweils im Inneren mit Werten versehen sind, deren Größe der Distanz der entsprechenden Metrik entspricht. In dem Diagramm DH sind dabei die Distanzen der Hausdorff-Metrik, in dem Diagramm DC die Distanzen der Chamfer-Metrik und in dem Diagramm DP die Distanzen der PoLiS-Metrik wiedergegeben. Wie man erkennt, liefern die Hausdorff-Metrik und die Chamfer-Metrik für das Objekt 02 ein mittleres Distanzmaß und für das Objekt 04 das höchste Distanzmaß. Dies entspricht jedoch nicht den tatsächlichen Gegebenheiten, wie aus Fig. 4 ersichtlich ist. Das Objekt 02 unterscheidet sich in seiner Struktur im Vergleich zu den anderen Objekten am deutlichsten von dem Referenzobjekt R2 und sollte deshalb das höchste Distanzmaß aufweisen. Im Unterschied hierzu ermittelt die PoLiS-Metrik gemäß dem Diagramm DP in der Tat das größte Distanzmaß und somit die größte Unähnlichkeit zwischen dem Objekt 02 und dem Referenzobjekt R2.

Die im Vorangegangenen beschriebenen Ausführungsformen der Erfindung weisen eine Reihe von Vorteilen auf. Insbesondere wird ein aussagekräftiger Vergleich zwischen extrahierten Objekten aus Bilddaten und entsprechenden Referenzobjekten durch eine neuartige Metrik geschaffen. Auf diese Weise kann sehr gut die Qualität von extrahierten Objekten in digitalen Bildern, wie z.B. von Gebäudeumrissen, beurteilt werden. Die erfindungsgemäße Metrik schätzt sehr gut die Ähnlichkeit zwischen Polygonen mit unterschiedlicher Anzahl von Eckpunkten ab und ist deutlich besser als die Hausdorff-Metrik bzw. die Chamfer-Metrik, die zum Vergleich herangezogen wurden. Die im erfindungsgemäßen Verfahren verwendete Metrik verändert sich linear, wenn kleine Veränderungen in der Form einer Translation, Rotation oder Skalierung zwischen den Polygonen der verglichenen Objekte auftreten. Die Metrik ist somit ein kombiniertes Maß, welches sowohl die Positionsgenauigkeit als auch die Unterschiede in den Umrissen von Polygonen berücksichtigt.

Obwohl die Metrik im Vorangegangenen in zwei Dimensionen für Polygone beschrieben wurde, kann sie problemlos auch auf drei Dimensionen erweitert werden. Die obigen Gleichungen behalten dabei ihre Gültigkeit, wobei die einzelnen Eckpunkte dann jedoch dreidimensionale Eckpunkte sind und die Liniensegmente durch Flächensegmete ersetzt sind. Die entsprechenden Objekte bzw. Referenzobjekte sind somit nicht mehr Polygone, sondern Polyeder.

Literaturverzeichnis:

[1] J. Zhang, R. Collins, Y. Liu: "Representation and matching of articulated shapes", in Proceedings of the 2004 IEEE Computer Society Conference on Computer Vision and Pattern Recognition, 2004. CVPR 2004, Vol. 2, Seiten II-342-II-349 Vol. 2.

[2] R.C. Veltkamp, M. Hagedoorn: "State-of-the-Art in Shape Matching", Utrecht University, Department of Computer Science, The Netherlands, 1999.

[3] F. Rottensteiner, G. Sohn, M. Gerke, J.D. Wegner, U. Breitkopf, J. Jung: "Results of the ISPRS benchmark on urban object detection and 3D building reconstruction", ISPRS Journal of Photogrammetry and Remote Sensing.

**Patentansprüche**

1. Verfahren zum rechnergestützten Verarbeiten von digitalen Bilddaten, welche ein oder mehrere, aus einem digitalen Bild extrahierte Objekte (O, O1, ..., 09) in einem Raumbereich mit zugeordnetem Koordinatensystem enthalten und in welchen ein jeweiliges Objekt (O, O1, ..., 09) durch einen Objektumriss umfassend Eckpunkte (a1, a2, a3) mit zweidimensionalen oder dreidimensionalen Positionen und Liniensegmente (L) oder Flächensegmente zwischen den Eckpunkten (a1, a2, a3) definiert ist, wobei ein jeweiliges Objekt (O, O1, ..., 09) mit einem zugeordneten Referenzobjekt (R, R1, ..., R9) aus Referenzdaten verglichen wird, wobei das zugeordnete Referenzobjekt (R, R1, ..., R9) im gleichen Koordinatensystem wie die digitalen Bilddaten durch einen Referenzumriss umfassend Eckpunkte (b1, b2) mit zweidimensionalen oder dreidimensionalen Positionen und Liniensegmente (L') oder Flächensegmente zwischen den Eckpunkten (b1, b2) definiert ist,
**dadurch gekennzeichnet, dass**
der Vergleich eines jeweiligen Objekts (O, O1, ..., 09) mit dem zugeordneten Referenzobjekt (O, O1, ..., 09) derart erfolgt, dass für das jeweilige Objekt (O, O1, ..., 09) ein Faktor ermittelt wird, der von einem Abstandsmaß (p(A, B)) abhängt, welches aus ersten und zweiten minimalen Abständen (d1, d2) berechnet wird, wobei für jeden Eckpunkt (a1, a2, a3) des jeweiligen Objekts (O, O1, ..., 09) ein minimaler erster Abstand (d1) ermittelt wird, welcher der geringste Abstand des jeweiligen Eckpunkts (a1, a2, a3) des jeweiligen Objekts (O, O1, ..., 09) zu dem Referenzumriss des zugeordneten Referenzobjekts (R, R1, ..., R9) ist, und wobei für jeden Eckpunkt (b1, b2) des zugeordneten Referenzobjekts (R, R1, ..., R9) ein minimaler zweiter Abstand (d2) ermittelt wird, welcher der geringste Abstand des jeweiligen Eckpunkts (b1, b2) des zugeordneten Referenzobjekts (R, R1, ..., R9) zu dem Objektumriss des jeweiligen Objekts (O, O1, ..., 09) ist.

2. Verfahren nach Anspruch 1, **dadurch gekennzeichnet, dass** das Abstandsmaß (p(A, B)) eine Metrik ist.

3. Verfahren nach Anspruch 1 oder 2, **dadurch gekennzeichnet, dass** die ersten und zweiten minimalen Abstände (d1, d2) euklidische Abstände sind.

4. Verfahren nach einem der vorhergehenden Ansprüche, **dadurch gekennzeichnet, dass** das Abstandsmaß (p(A, B)) eine Summe aus allen ersten und zweiten Abständen (d1, d2) enthält.

5. Verfahren nach Anspruch 4, **dadurch gekennzeichnet, dass** die Summe eine gewichtete Summe ist, wobei alle ersten Abstände (d1) mit einem identischen ersten Gewichtungsfaktor und alle zweiten Abstände (d2) mit einem identischen zweiten Gewichtungsfaktor gewichtet sind.

6. Verfahren nach Anspruch 5, **dadurch gekennzeichnet, dass** der erste Gewichtungsfaktor von dem Kehrwert der Anzahl von Eckpunkten (a1, a2, a3) des jeweiligen Objekts (O, O1, ..., 09) abhängt und/oder der zweite Gewichtungsfaktor von dem Kehrwert der Anzahl von Eckpunkten (b1, b2) des zugeordneten Referenzobjekts (R, R1, ..., R9) abhängt.

7. Verfahren nach einem der vorhergehenden Ansprüche, **dadurch gekennzeichnet, dass** das Abstandsmaß p(A,B) wie folgt lautet:

$$p\left(A,B\right)=\frac{1}{2q}\sum_{j=1}^{q}\min_{b\in\partial B}\left\|a_{j}-b\right\|+\frac{1}{2r}\sum_{k=1}^{r}\min_{a\in\partial A}\left\|b_{k}-a\right\|$$

wobei $\|\bullet\|$ die Euklidische Distanz ist;
wobei $a_j$, j=1, ..., q ein Eckpunkt des Objektumrisses $\partial A$ des jeweiligen Objekts (O, O1, ..., 09) ist und dabei q der Anzahl der Eckpunkte des Objektumrisses $\partial A$ entspricht;
wobei $a \in \partial A$ die Punkte auf dem Objektumriss $\partial A$ repräsentiert;
wobei $b_k$, k=1, ..., r ein Eckpunkt des Referenzumrisses $\partial B$ des Referenzobjekts (R, R1, ..., R9) ist und dabei r der Anzahl der Eckpunkte des Referenzumrisses $\partial B$ entspricht;
wobei $b \in \partial B$ die Punkte auf dem Referenzumriss $\partial B$ repräsentiert.

8. Verfahren nach einem der vorhergehenden Ansprüche, **dadurch gekennzeichnet, dass** die Objekte (O, O1, ..., 09) aus einem digitalen Bild extrahiert sind, das ein Fernerkundungsbilds der Oberfläche eines Himmelskörpers ist, insbesondere der Erdoberfläche.

9. Verfahren nach Anspruch 8, **dadurch gekennzeichnet, dass** die Objekte (O, O1, ..., O9), welche aus dem Fernerkundungsbild extrahiert sind, Bauwerke und insbesondere Gebäude auf der Erdoberfläche sind, welche mit Referenzobjekten (R, R1, ..., R9) in der Form von Bauwerken und insbesondere Gebäuden auf der Erdoberfläche verglichen werden.

10. Computerprogrammprodukt mit einem auf einem maschinenlesbaren Träger gespeicherten Programmcode zur Durchführung eines Verfahrens nach einem der vorhergehenden Ansprüche, wenn der Programmcode auf einem Computer ausgeführt wird.

11. Computerprogramm mit einem Programmcode zur Durchführung eines Verfahrens nach einem der Ansprüche 1 bis 9, wenn der Programmcode auf einem Computer ausgeführt wird.

Fig. 1

Fig. 2

Fig. 3

EP 2 955 665 A1

Fig. 4

EP 2 955 665 A1

Fig. 5

Nummer der Anmeldung

EP 15 16 8187

Europäisches
Patentamt

European
Patent Office

Office européen
des brevets

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | M.J. Atallah et al.: "A Linear Time Algorithm for the Computation of Some Distance Function between convex Polygons", Opérations Research, 1991, Seiten 413-424, XP055224289, Gefunden im Internet: URL:http://archive.numdam.org/ARCHIVE/RO/RO_1991__25_4/RO_1991__25_4_413_0/RO_1991__25_4_413_0.pdf [gefunden am 2015-10-27] | 1-5,8-11 | INV. G06K9/62 |
| Y | * das ganze Dokument * | 6,7 | |
| Y | DUBUISSON M-P ET AL: "A modified Hausdorff distance for object matching", PATTERN RECOGNITION, 1994. VOL. 1 - CONFERENCE A: COMPUTER VISION & IM AGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, Bd. 1, 9. Oktober 1994 (1994-10-09), Seiten 566-568, XP010216070, DOI: 10.1109/ICPR.1994.576361 ISBN: 978-0-8186-6265-2 * das ganze Dokument * | 6,7 | RECHERCHIERTE SACHGEBIETE (IPC) G06K |

-/--

Der vorliegende Recherchenbericht wurde für alle Patentansprüche erstellt

| Recherchenort | Abschlußdatum der Recherche | Prüfer |
|---|---|---|
| Den Haag | 29. Oktober 2015 | Neubüser, Bernhard |

Europäisches
Patentamt

European
Patent Office

Office européen
des brevets

**EUROPÄISCHER RECHERCHENBERICHT**

**Nummer der Anmeldung**

EP 15 16 8187

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| L | AVBELJ JANJA ET AL: "A Metric for Polygon Comparison and Building Extraction Evaluation", IEEE GEOSCIENCE AND REMOTE SENSING LETTERS, IEEE SERVICE CENTER, NEW YORK, NY, US, Bd. 12, Nr. 1, 1. Januar 2015 (2015-01-01), Seiten 170-174, XP011556315, ISSN: 1545-598X, DOI: 10.1109/LGRS.2014.2330695 [gefunden am 2014-08-14] * das ganze Dokument * ----- | 1-11 | |
| A | Normand Grégoire et al: "Hausdorff distance between convec polygons", , 1998, XP055223942, Gefunden im Internet: URL:http://cgm.cs.mcgill.ca/~godfried/teaching/cg-projects/98/normand/main.html [gefunden am 2015-10-27] * das ganze Dokument * ----- | 1-11 | RECHERCHIERTE SACHGEBIETE (IPC) |
| A | M. Atallah: "A Linear Time Algorithm for the Hausdorff Distance Between Convex Polygons", Computer Science Technical Reports. Paper, 1983, XP055223943, Gefunden im Internet: URL:http://docs.lib.purdue.edu/cgi/viewcontent.cgi?article=1362&context=cstech [gefunden am 2015-10-27] * das ganze Dokument * ----- -/-- | 1-11 | |

Der vorliegende Recherchenbericht wurde für alle Patentansprüche erstellt

| Recherchenort | Abschlußdatum der Recherche | Prüfer |
|---|---|---|
| Den Haag | 29. Oktober 2015 | Neubüser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung

EP 15 16 8187

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | P. COX ET AL: "Optimal Matching of Convex Polygons", PATTERN RECOGNITION LETTERS, ELSEVIER, AMSTERDAM, NL, Bd. 9, Nr. 5, 1. Juni 1989 (1989-06-01), Seiten 327-334, XP000034119, ISSN: 0167-8655, DOI: 10.1016/0167-8655(89)90061-5 * das ganze Dokument * ----- | 1-11 | |
| A | Dan Huttenlocher: "CS664 Computer Vision: 8. Matching Binary Images", , 1. Januar 2008 (2008-01-01), XP055224262, Gefunden im Internet: URL:http://www.cs.cornell.edu/courses/cs664/2008sp/handouts/cs664-8-binary-matching.pdf [gefunden am 2015-10-28] * Seiten 4-6,9 * ----- | 1-11 | |
| A | Anonymous: "Hausdorff Distance Image Comparison", , 22. Januar 1998 (1998-01-22), XP055224272, Gefunden im Internet: URL:http://web.archive.org/web/19980122064048/http://www.cs.cornell.edu/vision/hausdorff/hausdist.html [gefunden am 2015-10-28] * das ganze Dokument * ----- | 1-11 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 29. Oktober 2015 | Neubüser, Bernhard |

EPO FORM 1503 03.82 (P04C03)

**EP 2 955 665 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **J. ZHANG ; R. COLLINS ; Y. LIU.** Representation and matching of articulated shapes. *Proceedings of the 2004 IEEE Computer Society Conference on Computer Vision and Pattern Recognition, 2004. CVPR,* 2004, vol. 2, II-342-II-349
- **R.C. VELTKAMP ; M. HAGEDOORN.** *State-of-the-Art in Shape Matching,* 1999
- **F. ROTTENSTEINER ; G. SOHN ; M. GERKE ; J.D. WEGNER ; U. BREITKOPF ; J. JUNG.** Results of the ISPRS benchmark on urban object detection and 3D building reconstruction. *ISPRS Journal of Photogrammetry and Remote Sensing*